(19) Europäisches Patentamt / European Patent Office / Office européen des brevets

(11) **EP 4 299 612 B1**

(12) **EUROPEAN PATENT SPECIFICATION**

(45) Date of publication and mention
of the grant of the patent:
**04.03.2026 Bulletin 2026/10**

(21) Application number: **22759277.1**

(22) Date of filing: **31.01.2022**

(51) International Patent Classification (IPC):
*C08F 8/00* *(2006.01)*      *B29C 45/00* *(2006.01)*
*B29C 45/26* *(2006.01)*      *C08F 214/18* *(2006.01)*
*C08F 214/26* *(2006.01)*      *C08J 5/18* *(2006.01)*
*H01B 7/02* *(2006.01)*      *C08F 8/22* *(2006.01)*

(52) Cooperative Patent Classification (CPC):
(C-Sets available)
**H01B 3/445; B29C 45/00; B29C 45/26; C08F 8/22;
C08F 214/262; C08J 5/18; C09D 127/18**      (Cont.)

(86) International application number:
**PCT/JP2022/003651**

(87) International publication number:
**WO 2022/181236 (01.09.2022 Gazette 2022/35)**

(54) **COPOLYMER, MOLDED BODY, INJECTION MOLDED BODY, AND COATED ELECTRICAL WIRE**

COPOLYMER, FORMKÖRPER, SPRITZGUSSKÖRPER UND BESCHICHTETER ELEKTRISCHER DRAHT

COPOLYMÈRE, CORPS MOULÉ, CORPS MOULÉ PAR INJECTION ET FIL ÉLECTRIQUE ENROBÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2021 JP 2021031093
30.09.2021 JP 2021162150**

(43) Date of publication of application:
**03.01.2024 Bulletin 2024/01**

(73) Proprietor: **DAIKIN INDUSTRIES, LTD.
Osaka-Shi, Osaka 530-0001 (JP)**

(72) Inventors:
• **ISAKA, Tadaharu
Osaka-shi, Osaka 530-0001 (JP)**
• **ZENKE, Yumi
Osaka-shi, Osaka 530-0001 (JP)**
• **YAMAMOTO, Yukari
Osaka-shi, Osaka 530-0001 (JP)**
• **TSUDA, Hayato
Osaka-shi, Osaka 530-0001 (JP)**

(74) Representative: **Hoffmann Eitle
Patent- und Rechtsanwälte PartmbB
Arabellastraße 30
81925 München (DE)**

(56) References cited:
**EP-B1- 1 287 046          WO-A1-2008/047906
WO-A1-2008/047906          US-A1- 2010 314 153
US-A1- 2021 024 769**

(52) Cooperative Patent Classification (CPC): (Cont.)

C-Sets
**C08F 8/22, C08F 214/262;**
**C08F 214/262, C08F 216/1408**

**Description**

TECHNICAL FIELD

The present disclosure relates to a copolymer, a formed article, an injection molded article, and a coated electric wire.

BACKGROUND ART

Patent Document 1 describes a fluororesin composition comprising two or more hot-melt fluororesins having different melt flow rates, wherein one of the two or more hot-melt fluororesins is a high MFR hot-melt fluororesin having a melt flow rate of 35 g/10 min or more and another is a low MFR hot-melt fluororesin having a melt flow rate of 10 g/10 min or more and less than 35 g/10 min, and the ratio (MFRa/MFRb) of the melt flow rate (MFRa) of the high MFR hot-melt fluororesin to the melt flow rate (MFRb) of the low MFR hot-melt fluororesin is greater than 1 and 10 or less. Patent Document 3 discloses TFE/PAVE copolymers for injection moulding and the coating of electric wires. These polymers comprise less than 6 functional groups per million carbon atoms and have a MFR in the range of 0.5-40 g/10 min.

RELATED ART

PATENT DOCUMENTS

> Patent Document 1: Japanese Patent Laid-Open No. 2019-210420
> Patent Document 2: Japanese Patent Laid-Open No. 2008-066254
> Patent Document 3: US 2021 024769 A1

SUMMARY OF THE INVENTION

PROBLEM TO BE SOLVED BY THE INVENTION

An object of the present disclosure is to provide a copolymer that is capable of obtaining an injection molded article having excellent surface smoothness by injection molding in a high productivity, that is capable of easily forming a thin coating layer having a uniform thickness and fewer defects on a core wire having a small diameter by extrusion forming, and that is capable of obtaining a formed article having extremely good water vapor low permeability and having excellent abrasion resistance, air low permeability, chemical solution low permeability, creep resistance, 110°C high-temperature rigidity, heat distortion resistance after immersion in a chemical solution, and resistance to swelling by a chemical solution.

MEANS FOR SOLVING THE PROBLEM

According to the present disclosure, there is provided a copolymer containing tetrafluoroethylene unit and perfluoro(propyl vinyl ether) unit, wherein the copolymer has a content of perfluoro(propyl vinyl ether) unit of 4.8 to 5.7% by mass with respect to the whole of the monomer units, a melt flow rate at 372°C of 33.0 to 39.0 g/10 min, and the number of functional groups of 50 or less per $10^6$ main-chain carbon atoms.

According to the present disclosure, an injection molded article comprising the above copolymer is further provided.

According to the present disclosure, a coated electric wire having a coating layer comprising the copolymer is further provided.

According to the present disclosure, a formed article comprising the above copolymer, wherein the formed article is a current collector holder, a member to be compressed, a piping member, a joint, or an electric wire coating is further provided.

EFFECTS OF INVENTION

According to the present disclosure, there can be provided a copolymer that is capable of obtaining an injection molded article having excellent surface smoothness by injection molding in a high productivity, that is capable of easily forming a thin coating layer having a uniform thickness and fewer defects on a core wire having a small diameter by extrusion forming, and that is capable of obtaining a formed article having extremely good water vapor low permeability and having excellent abrasion resistance, air low permeability, chemical solution low permeability, creep resistance, 110°C high-temperature rigidity, heat distortion resistance after immersion in a chemical solution, and resistance to swelling by a chemical solution.

DESCRIPTION OF EMBODIMENTS

Hereinafter, specific embodiments of the present disclosure will now be described in detail, but the present disclosure is not limited to the following embodiments.

A copolymer of the present disclosure contains tetrafluoroethylene (TFE) unit and perfluoro(propyl vinyl ether) (PPVE) unit.

A battery such as a secondary battery is provided with a mechanism for interrupting a current (a current interrupting mechanism: CID) such that the current can be interrupted when the temperature or pressure inside the battery rises. The current interrupting mechanism includes, for example, a deformable member and a current collector that is electrically connected to the deformable member, and is disposed between an external connection terminal and a power generating element that is accommodated in the battery. When the temperature or pressure inside the battery rises, the deformable member deforms, thereby breaking an easily breakable portion provided in the current collector, and thus the conductive path between the deformable member and the current collector is interrupted.

Vibrations or impacts applied to the current interrupting mechanism cause it to malfunction and interrupt the current. Accordingly, Patent Document 2 proposes the use of a current collector holder made of an insulating resin or the like to hold the current collector and the deformable member to alleviate vibrations and impacts applied to the current interrupting mechanism. Also, Patent Document 2 describes that polypropylene, polyphenylene sulfide, polyether ether ketone, a copolymer of tetrafluoroethylene and perfluoroalkoxyethylene, and the like are usable as insulating resins.

As described above, the current collector holder is disposed to alleviate vibrations and impacts applied to the current interrupting mechanism and, accordingly, the current collector holder is required to have insulating property and the like. In addition to insulating property and the like, if properties required of the sealing member, such as electrolytic solution low permeability, crack resistance after immersion in an electrolytic solution, and resistance to swelling by an electrolytic solution, can be imparted to the current collector holder, a design flexibility of a battery may be significantly improved.

It has been found that the content of PPVE unit, the melt flow rate (MFR), and the number of functional groups of a copolymer containing TFE unit and PPVE unit of which are suitably regulated, provides a formed article having extremely good water vapor low permeability and having excellent abrasion resistance, air low permeability, chemical solution low permeability, creep resistance, 110°C high-temperature rigidity, heat distortion resistance after immersion in a chemical solution, and resistance to swelling by a chemical solution.

Accordingly, the use of the copolymer of the present disclosure can result in extremely good water vapor low permeability, and can impart abrasion resistance, electrolytic solution low permeability, creep resistance, 110°C high-temperature rigidity, heat distortion resistance after immersion in a chemical solution, and resistance to swelling by a chemical solution, to a current collector holder. As a result, it has been found that the function as a sealing member can be imparted to the current collector holder while enhancing the reliability of the primary function required of the current collector holder. By using the copolymer of the present disclosure, a battery may be provided with a current collector holder and a gasket that are integrated into a single body.

Moreover, since the copolymer of the present disclosure has excellent moldability, by using the copolymer of the present disclosure, an injection-molded article having excellent surface smoothness can be also obtained in a high productivity.

In addition, by using the copolymer of the present disclosure, a thin coating layer having a uniform thickness and fewer defects can be easily formed by extrusion forming on a core wire having a small diameter.

The copolymer of the present disclosure is a melt-fabricable fluororesin. Being melt-fabricable means that a polymer can be melted and processed by using a conventional processing device such as an extruder or an injection molding machine.

The content of the PPVE unit of the copolymer is, with respect to the whole of the monomer units, 4.8 to 5.7% by mass, preferably 4.9% by mass or higher, more preferably 5.0% by mass or higher, and is preferably 5.6% by mass or lower, more preferably 5.5% by mass or lower, and still more preferably 5.4% by mass or lower. Due to that the content of the PPVE unit of the copolymer is in the above range, a formed article can be obtained that has extremely good water vapor low permeability and has excellent abrasion resistance, air low permeability, chemical solution low permeability, creep resistance, 110°C high-temperature rigidity, heat distortion resistance after immersion in a chemical solution, and resistance to swelling by a chemical solution. When the content of the PPVE unit of the copolymer is excessively small, a formed article having excellent abrasion resistance and crack resistance cannot be obtained. When the content of the PPVE unit of the copolymer is excessively large, a formed article having extremely good water vapor low permeability and excellent air low permeability, low permeability with respect to a chemical solution such as an electrolytic solution, creep resistance, 110°C high-temperature rigidity cannot be obtained.

The content of the TFE unit of the copolymer is, with respect to the whole of the monomer units, preferably 94.3 to 95.2% by mass, more preferably 94.4% by mass or higher, still more preferably 94.5% by mass or higher, and especially preferably 94.6% by mass or higher, and more preferably 95.1% by mass or lower and still more preferably 95.0% by mass or lower. Due to that the content of the TFE unit of the copolymer is in the above range, a formed article can be obtained that has extremely good water vapor low permeability and has excellent abrasion resistance, air low permeability, chemical solution low permeability, creep resistance, 110°C high-temperature rigidity, heat distortion resistance after immersion in a chemical solution, and resistance to swelling by a chemical solution. When the content of the TFE unit of the copolymer is excessively large, a formed article having excellent abrasion resistance and crack resistance cannot possibly be obtained. When the content of the TFE unit of the copolymer is excessively small, a formed article having extremely good water vapor low permeability and excellent air low permeability, low permeability with respect to a chemical solution such as an electrolytic solution, creep resistance, 110°C high-temperature rigidity cannot possibly be obtained.

In the present disclosure, the content of each monomer unit in the copolymer is measured by a $^{19}$F-NMR method.

The copolymer can also contain a monomer unit derived from a monomer copolymerizable with TFE and PPVE. In this case, the content of the monomer unit copolymerizable with TFE and PPVE is, with respect to the whole of the monomer units of the copolymer, preferably 0 to 1.0% by mass, more preferably 0.1 to 0.5% by mass, and still more preferably 0.2 to 0.3% by mass.

The monomers copolymerizable with TFE and PPVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] represented by $CF_2=CF-ORf^1$ wherein $Rf^1$ is a perfluoroalkyl group having 1 to 8 carbon atoms (excluding PPVE), and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and is more preferably a copolymer consisting only of the TFE unit and the PPVE unit.

The melt flow rate (MFR) of the copolymer is 33.0 to 39.0 g/10 min. The MFR of the copolymer is preferably 34.0 g/10 min or more and more preferably 35.0 g/10 min or more, and preferably 38.0 g/10 min or less. Due to that the MFR of the copolymer is in the above range, a formed article can be obtained that has extremely good water vapor low permeability and has excellent abrasion resistance, air low permeability, chemical solution low permeability, creep resistance, 110°C high-temperature rigidity, heat distortion resistance after immersion in a chemical solution, and resistance to swelling by a chemical solution.

Moreover, due to that the MFR of the copolymer is in the above range, by using such a copolymer, an injection molded article having excellent surface smoothness can be obtained in a high productivity, and a thin coating layer having a uniform thickness and fewer defects can be easily formed on a core wire having a small diameter. Also, due to that the MFR of the copolymer is in the above range, the number of sparks generated in a coating layer obtained by using such a copolymer can be reduced. Further, by using the copolymer of the present disclosure, small injection molded articles having a thin-wall thickness can be produced simultaneously in a large number thereof.

In the present disclosure, the MFR is a value obtained as a mass (g/10 min) of the polymer flowing out from a nozzle having an inner diameter of 2.1 mm and a length of 8 mm per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

In the present disclosure, the number of functional groups per $10^6$ main-chain carbon atoms of the copolymer is 50 or less. The number of functional groups per $10^6$ main-chain carbon atoms of the copolymer is preferably 40 or less, more preferably 30 or less, still more preferably 20 or less, further still more preferably 15 or less, especially preferably 10 or less, and most preferably less than 6. Due to that the number of functional groups of the copolymer is in the above range, a formed article can be obtained that has extremely good water vapor low permeability and has excellent abrasion resistance, air low permeability, chemical solution low permeability, creep resistance, 110°C high-temperature rigidity, heat distortion resistance after immersion in a chemical solution, and resistance to swelling by a chemical solution. In addition, due to that the number of functional groups of the copolymer is in the above range, a thin coating layer can be formed by extrusion forming at a high rate on a core wire having a small diameter. When the number of functional groups of the copolymer is excessive, it is difficult to obtain a formed article having excellent low permeability with respect to a chemical solution such as an electrolytic solution, creep resistance, and resistance to swelling by a chemical solution such as an electrolytic solution.

For identification of the kind of functional groups and measurement of the number of the functional groups, infrared spectroscopy can be used.

The number of the functional groups is measured, specifically, by the following method. First, the copolymer is formed by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of functional groups per $1 \times 10^6$ carbon atoms in the copolymer is calculated according to the following formula (A).

$$N = I \times K/t \cdots (A)$$

I: absorbance
K: correction factor
t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

Table 1

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of -CH$_2$CF$_2$H, -CH$_2$COF, -CH$_2$COOH, - CH$_2$COOCH$_3$ and -CH$_2$CONH$_2$ are lower by a few tens of kaysers ($cm^{-1}$) than those of -CF$_2$H, -COF, -COOH free and -COOH bonded, - COOCH$_3$ and -CONH$_2$ shown in the Table, respectively.

For example, the number of functional groups -COF is the total of the number of a functional group determined from an absorption peak having an absorption frequency of 1,883 $cm^{-1}$ derived from -CF$_2$COF and the number of a functional group determined from an absorption peak having an absorption frequency of 1,840 $cm^{-1}$ derived from -CH$_2$COF.

The functional groups are ones present on main chain terminals or side chain terminals of the copolymer, and ones present in the main chain or the side chains. The number of functional groups may be the total number of -CF=CF$_2$, -CF$_2$H, - COF, -COOH, -COOCH$_3$, -CONH$_2$ and -CH$_2$OH.

The functional groups are introduced to the copolymer by, for example, a chain transfer agent or a polymerization initiator used for production of the copolymer. For example, in the case of using an alcohol as the chain transfer agent, or a peroxide having a structure of -CH$_2$OH as the polymerization initiator, -CH$_2$OH is introduced on the main chain terminals of the copolymer. Alternatively, the functional group is introduced on the side chain terminal of the copolymer by polymerizing a monomer having the functional group.

By subjecting the copolymer having such a functional group to a fluorination treatment, a copolymer having the number of functional groups within the above range can be obtained. That is, the copolymer of the present disclosure is preferably one which is subjected to the fluorination treatment. Further, the copolymer of the present disclosure preferably has -CF$_3$ terminal groups.

The melting point of the copolymer is preferably 285 to 310°C, more preferably 290°C or higher, still more preferably 294°C or higher, and especially preferably 300°C or higher, and more preferably 303°C or lower. Due to that the melting point is in the above range, a copolymer can be obtained that provides a formed article having extremely good water vapor low permeability and having excellent abrasion resistance, air low permeability, chemical solution low permeability, creep resistance, 110°C high-temperature rigidity, heat distortion resistance after immersion in a chemical solution, and resistance to swelling by a chemical solution.

In the present disclosure, the melting point can be measured by using a differential scanning calorimeter [DSC].

The water vapor permeability of the copolymer is preferably 10.7 g·cm/m$^2$ or lower, and more preferably 10.4 g·cm/m$^2$ or lower. Due to that the content of the PPVE unit, the melt flow rate (MFR), and the number of functional groups of the copolymer containing the TFE unit and the PPVE unit are suitably regulated, the copolymer of the present disclosure has sufficient water vapor low permeability. Accordingly, the formed article containing the copolymer of the present disclosure can suitably be used as a current collector holder and a sealing member of a battery such as a non-aqueous electrolytic solution secondary battery, and a piping member and a joint used to transfer a chemical solution that should not be mixed with water such as water vapor in outside air.

In the present disclosure, the water vapor permeability can be measured under the condition of a temperature of 95°C and for 30 days. Specific measurement of the water vapor permeability can be carried out by a method described in the Examples.

The air permeability coefficient of the copolymer is preferably 380 cm$^3$·mm/ (m$^2$·24 h·atm) or less, and more preferably 370 cm$^3$·mm/ (m$^2$·24 h·atm) or less. Due to that the content of the PPVE unit, the melt flow rate (MFR), and the number of functional groups of the copolymer containing the TFE unit and the PPVE unit are suitably regulated, the copolymer of the present disclosure has excellent air low permeability.

In the present disclosure, the air permeability coefficient can be measured under the condition of a test temperature of 70°C and a test humidity of 0% RH. Specific measurement of the air permeability coefficient can be carried out by a method described in the Examples.

The electrolytic solution permeability of the copolymer is preferably 6.3 g·cm/m$^2$ or lower. Do to that the content of the PPVE unit, the melt flow rate (MFR), and the number of functional groups of the copolymer containing the TFE unit and the PPVE unit are suitably regulated, the copolymer of the present disclosure has excellent low electrolytic solution permeability. That is, by using the copolymer of the present disclosure, a formed article that hardly makes a chemical solution such as an electrolytic solution to permeate can be obtained.

In the present disclosure, the electrolytic solution permeability can be measured under the condition of a temperature of 60°C and for 30 days. Specific measurement of the electrolytic solution permeability can be carried out by a method described in the Examples.

The copolymer of the present disclosure can be produced by a polymerization method such as suspension polymerization, solution polymerization, emulsion polymerization or bulk polymerization. The polymerization method is preferably emulsion polymerization or suspension polymerization. In these polymerization methods, conditions such as temperature and pressure, and a polymerization initiator and other additives can suitably be set depending on the formulation and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an ω-hydroperfluoroalkyl group or a fluorochloroalkyl group.

Examples of the di[fluoro(or fluorochloro)acyl] peroxides include di(ω-hydro-dodecafluorohexanoyl) peroxide, di(ω-hydro-tetradecafluoroheptanoyl) peroxide, di(ω-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrodo-decafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, for example, nonionic surfactants, anionic surfactants and cationic surfactants may be used. Among these, fluorine-containing anionic surfactants are preferred, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to water in the polymerization) is preferably 50 to 5,000 ppm.

Examples of the chain transfer agent include hydrocarbons such as ethane, isopentane, n-hexane, and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride and methyl chloride. The amount of the chain transfer agent to be added may vary depending on the chain transfer constant value of the compound to be used, but is usually in the range of 0.01 to 20% by mass with respect to the solvent in the polymerization.

The solvent may include water and mixed solvents of water and an alcohol.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalaknes such as $CF_2ClCFClCF_2CF_3$ and $CF_3CFClCFClCF_3$; hydrofluroalkanes such as $CF_3CFHCFHCF_2CF_2CF_3$, $CF_2HCF_2CF_2CF_2CF_2H$ and $CF_3CF_2CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_2CF_3$, and among these, perfluoroalkanes are preferred. The amount of the fluorosolvent to be used is, from the viewpoint of suspensibility and the economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount, and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, washing and drying the copolymer contained in the aqueous dispersion. Then in the case of obtaining the copolymer as a slurry by the polymerization reaction, the copolymer can be recovered by taking out the slurry from a reaction container, and washing and drying the slurry. The copolymer can be recovered in a shape of powder by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably the melting point of the copolymer + 20°C to the melting point of the copolymer + 140°C. A method of cutting the copolymer is not limited, and a conventionally known method can be adopted such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water of 30 to 200°C, steam of 100 to 200°C or hot air of 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, -COOCH$_3$, -CH$_2$OH, -COF, -CF=CF$_2$ and -CONH$_2$, and thermally relatively stable functional groups thereof, such as -CF$_2$H, can be converted to thermally very stable -CF$_3$. Consequently, the total number (number of functional groups) of -COOH, -COOCH$_3$, -CH$_2$OH, -COF, -CF=CF$_2$, - CONH$_2$ and -CF$_2$H of the copolymer can easily be controlled in the above-mentioned range.

The fluorine-containing compound is not limited, but includes fluorine radical sources generating fluorine radicals under the fluorination treatment condition. The fluorine radical sources include $F_2$ gas, $CoF_3$, $AgF_2$, $UF_6$, $OF_2$, $N_2F_2$, $CF_3OF$, and halogen fluorides (for example, $IF_5$ and $ClF_3$).

The fluorine radical source such as $F_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas include nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas ($F_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

As the above-mentioned other components, other copolymers other than the copolymer may be used. The other polymers include fluororesins other than the copolymer, fluoroelastomer, and non-fluorinated polymers.

A method of producing the composition include a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, and is suitably used as a forming material. Aqueous dispersions, solutions and suspensions of the copolymer of the present disclosure, and the copolymer/solvent-based materials can also be utilized; and these can be used for application of coating materials, encapsulation, impregnation, and casting of films. However, since the copolymer of the present disclosure has the above-described properties, it is preferable to use the copolymer as the forming material.

Formed articles may be obtained by forming the copolymer of the present disclosure or the above composition.

A method of forming the copolymer or the composition is not limited, and includes injection molding, extrusion forming, compression molding, blow molding, transfer molding, rotomolding, and rotolining molding. As the forming method, among these, preferable are extrusion forming, compression molding, injection molding and transfer molding; more preferable are injection molding, extrusion forming and transfer molding from the viewpoint of being able to produce forming articles in a high productivity, and still more preferable is injection molding. That is, it is preferable that formed articles are extrusion formed articles, compression molded articles, injection molded articles or transfer molded articles; and from the viewpoint of being able to produce molded articles in a high productivity, being injection molded articles, extrusion formed articles or transfer molded articles is more preferable, and being injection molded articles is still more preferable. By forming the copolymer of the present disclosure by injection molding, an injection molded article having excellent surface smoothness can be obtained in a high productivity.

The formed article containing the copolymer of the present disclosure may be, for example, a nut, a bolt, a joint, a film, a bottle, a gasket, an electric wire coating, a tube, a hose, a pipe, a valve, a sheet, a seal, a packing, a tank, a roller, a container, a cock, a connector, a filter housing, a filter cage, a flowmeter, a pump, a wafer carrier, and a wafer box.

The copolymer of the present disclosure, the above composition and the above formed article can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes; inner surface lining materials of chemical solution tanks and piping of chemical plants and semiconductor factories; members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks;

members for food and beverage transfer, such as tubes, hoses, belts, packings and joints for food and beverage, food packaging materials, and members for glass cooking appliances; members for waste liquid transport, such as tubes and hoses for waste transport;

members for high-temperature liquid transport, such as tubes and hoses for high-temperature liquid transport;

members for steam piping, such as tubes and hoses for steam piping;

corrosionproof tapes for piping, such as tapes wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses, and evap hoses. The above fuel transfer members can also be used as fuel transfer members for gasoline additive-containing fuels, resultant to sour gasoline, resistant to alcohols, and resultant to methyl tertiary butyl ether and amines and the like.

The above chemical stoppers and packaging films for chemicals have excellent chemical resistance to acids and the like. The above chemical solution transfer members also include corrosion-proof tapes wound on chemical plant pipes.

The above formed articles also include vehicular radiator tanks, chemical solution tanks, bellows, spacers, rollers and gasoline tanks, waste solution transport containers, high-temperature liquid transport containers and fishery and fish farming tanks.

The above formed articles further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed articles containing the copolymer of the present disclosure have extremely good water vapor low permeability, have excellent abrasion resistance, air low permeability, chemical solution low permeability, creep resistance, 110°C high-temperature rigidity, heat distortion resistance after immersion in a chemical solution and resistance to swelling by a chemical solution, the formed articles can suitably be utilized as a nut, a bolt, a joint, a packing, a valve, a cock, a connector, a filter housing, a filter cage, a flowmeter, a pump, or the like.

Due to that the formed articles containing the copolymer of the present disclosure can be produced by injection molding at an extremely high injection rate, have extremely good water vapor low permeability, have excellent abrasion resistance, air low permeability, chemical solution low permeability, creep resistance, 110°C high-temperature rigidity, heat distortion resistance after immersion in a chemical solution and resistance to swelling by a chemical solution, the formed articles can suitably be utilized as members to be compressed such as a gasket or a packing. The gasket or packing of the present disclosure can be inexpensively produced by injection molding, has extremely good water vapor low permeability, and also has excellent abrasion resistance, air low permeability, chemical solution low permeability, creep resistance, 110°C high-temperature rigidity, heat distortion resistance after immersion in a chemical solution and resistance to swelling by a chemical solution. Due to that the members to be compressed of the present disclosure have excellent water vapor low permeability, the members can suitably be used as a piping member for transferring a chemical solution that should not be mixed with water such as water vapor in the outside air.

The size and shape of the members to be compressed of the present disclosure may suitably be set according to the application, and are not limited. The shape of the members to be compressed of the present disclosure may be, for example, annular. The members to be compressed of the present disclosure may also have, in plan view, a circular shape, an elliptic shape, a corner-rounded square or the like, and may be a shape having a throughhole in the central portion thereof.

It is preferable that the members to be compressed of the present disclosure are used as members constituting non-aqueous electrolyte batteries. Due to that the members to be compressed of the present disclosure have excellent low electrolytic solution permeability, heat distortion resistance after immersion in an electrolytic solution and resistance to swelling by an electrolytic solution, the members are especially suitable as members used in a state of contacting with a non-aqueous electrolyte in the non-aqueous electrolyte batteries. That is, the members to be compressed of the present disclosure may also ones having a liquid-contact surface with a non-aqueous electrolyte in the non-aqueous electrolyte batteries.

The members to be compressed of the present disclosure hardly make water vapor to penetrate. Therefore, by using the members to be compressed of the present disclosure, the permeation of water vapor from the outside to batteries can be suppressed. Consequently, by using the members to be compressed of the present disclosure, the deterioration of the battery performance and the shortening of the service life of the non-aqueous electrolyte battery can be suppressed.

The water vapor permeability of the member to be compressed of the present disclosure is, from the viewpoint that the deterioration and the shortening of the service life of the battery performance of the non-aqueous electrolyte batteries can be more suppressed, preferably 10.7 g·cm/m$^2$ or lower and more preferably 10.4 g·cm/m$^2$ or lower. The water vapor permeability of the members to be compressed can be measured under the condition of a temperature of 95°C and for 30 days.

The electrolytic solution permeability of the members to be compressed of the present disclosure is, from the viewpoint that the deterioration and the shortening of the service life of the battery performance of the non-aqueous electrolyte batteries can be more suppressed, preferably 6.3 g·cm/m$^2$ or lower. The electrolytic solution permeability of the members to be compressed can be measured under the condition of a temperature of 60°C and a duration of 30 days.

The non-aqueous electrolyte batteries are not limited as long as being batteries having a non-aqueous electrolyte, and examples include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, γ-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, and may be $LiClO_4$, $LiAsF_6$, $LiPF_6$, $LiBF_4$, $LiCl$, $LiBr$, $CH_3SO_3Li$, $CF_3SO_3Li$, cesium carbonate and the like.

The members to be compressed of the present disclosure can suitably be utilized, for example, as sealing members such as sealing gaskets or sealing packings, and insulating members such as insulating gaskets or insulating packings. The sealing members are members to be used for preventing leakage of a liquid or a gas, or penetration of a liquid or a gas from the outside. The insulating members are members to be used for insulating electricity. The members to be compressed of the present disclosure may also be members to be used for the purpose of both of sealing and insulation.

The members to be compressed of the present disclosure, due to containing the above copolymer, have the excellent insulating property. Therefore, in the case of using the members to be compressed of the present disclosure as insulating members, the members firmly adhere to two or more electrically conductive members and prevent short circuit over a long term.

By forming the copolymer of the present disclosure by extrusion forming, a thin coating layer can be formed on a core wire having a small diameter at a high take-over speed without discontinuity of the coating even when the diameter of the core wire is small, also a coating layer having excellent electric property can be formed, and thus the copolymer of the present disclosure can be utilized as a material for forming an electric wire coating. Accordingly, a coated electric wire provided with a coating layer containing the copolymer of the present disclosure also has excellent electric property because the coated electric wire barely has defects that causes sparks even when the diameter of the core wire is small and the coating layer is thin.

The coated electric wire has a core wire, and the coating layer installed on the periphery of the core wire and containing the copolymer of the present disclosure. For example, an extrusion formed article made by melt extruding the copolymer of the present disclosure on a core wire can be made into the coating layer. The coated electric wires are suitable to LAN cables (Ethernet cables), high-frequency transmission cables, flat cables, heat-resistant cables and the like, and among these, suitable to transmission cables such as LAN cables (Ethernet cables) and high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferably 2 mm or smaller.

With regard to specific examples of the core wire, for example, AWG (American Wire Gauge)-46 (solid copper wire of 40 μm in diameter), AWG-26 (solid copper wire of 404 μm in diameter), AWG-24 (solid copper wire of 510 μm in diameter), and AWG-22 (solid copper wire of 635 μm in diameter) may be used.

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, and is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 μm or smaller, more preferably 45 μm or smaller, still more preferably 35 μm or smaller, further still more preferably 30 μm or smaller, especially preferably 25 μm or smaller and further especially preferably 23 μm or smaller. Then, the average cell size is preferably 0.1 μm or larger and more preferably 1 μm or larger. The average cell size can be determined by taking an electron microscopic image of an electric wire cross section, calculating the diameter of each cell by image processing and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) × 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a molten state on the core wire to thereby form the coating layer.

In formation of a coating layer, by heating the copolymer and introducing a gas in the copolymer in a molten state, the coating layer containing cells can be formed. As the gas, there can be used, for example, a gas such as chlorodifluoromethane, nitrogen or carbon dioxide, or a mixture thereof. The gas may be introduced as a pressurized gas in the heated copolymer, or may be generated by mingling a chemical foaming agent in the copolymer. The gas dissolves in the copolymer in a molten state.

The copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that good electric property is provided. The printed wiring boards are not limited, but examples thereof include printed wiring boards of electronic circuits for cell phones, various computers, communication devices and the like. As the (2) formed article, antenna covers are preferable in that the dielectric loss is low.

So far, embodiments have been described, but it is to be understood that various changes and modifications of patterns and details may be made without departing from the subject matter and the scope of the claims.

EXAMPLES

The embodiments of the present disclosure will be described by Examples as follows, but the present disclosure is not limited only to these Examples.

Each numerical value in the Examples was measured by the following methods.

(Content of monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle having an inner diamete of 2.1 mm and a length of 8 mm at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was formed by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that is completely fluorinated and has no functional groups is obtained. From an absorption peak of a specific functional group observed on this difference spectrum, the number N of the functional group per $1\times10^6$ carbon atoms in the sample was calculated according to the following formula (A).

$$N = I \times K/t \cdots (A)$$

I: absorbance
K: correction factor
t: thickness of film (mm)

For reference, the absorption frequency, the molar absorption coefficient and the correction factor for the functional groups in the present disclosure are shown in Table 2. The molar absorption coefficients are those determined from FT-IR measurement data of low molecular model compounds.

[Table 2]

Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | I 600 | I 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step, at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corporation); and the melting point was determined from a melting curve peak observed in the second temperature raising step.

Comparative Example 1

51.8 L of pure water was charged in a 174 L-volume autoclave; nitrogen replacement was sufficiently carried out; thereafter, 40.9 kg of perfluorocyclobutane, 2.56 kg of perfluoro(propyl vinyl ether) (PPVE), and 2.29 kg of methanol were charged; and the temperature in the system was held at 35°C and the stirring speed was held at 200 rpm. Then, tetrafluoroethylene (TFE) was introduced under a pressure up to 0.64 MPa, and thereafter 0.103 kg of a 50% methanol solution of di-n-propyl peroxydicarbonate was charged to initiate polymerization. Since the pressure in the system decreased along with the progress of the polymerization, TFE was continuously supplied to make the pressure constant, and 0.055 kg of PPVE was additionally charged for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 43.1 kg of a powder.

The obtained powder was melt extruded at 360°C by a screw extruder (trade name: PCM46, manufactured by Ikegai Corp) to thereby obtain pellets of a TFE/PPVE copolymer. The PPVE content of the obtained pellets was measured by the method described above.

The obtained pellets were put in a vacuum vibration-type reactor VVD-30 (manufactured by OKAWARA MFG. CO., LTD.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 210°C for 10 hours. After the reaction was finished, the reactor interior was replaced sufficiently by $N_2$ gas to finish the fluorination reaction. By using the fluorinated pellets, the above physical properties were measured by the methods described above.

Comparative Example 2

Fluorinated pellets were obtained as in Comparative Example 1, except for changing the charged amount of PPVE to 2.81 kg, changing the charged amount of methanol to 4.78 kg, changing the charged amount of the 50% methanol solution of di-n-propyl peroxydicarbonate to 0.051 kg, and adding 0.059 kg of PPVE for every 1 kg of TFE supplied to thereby obtain 43.3 kg of a dry powder.

Comparative Example 3

Non-fluorinated pellets were obtained as in Comparative Example 1, except for changing the charge amount of PPVE to 2.62 kg, changing the charge amount of methanol to 2.02 kg, and adding 0.056 kg of PPVE for every 1 kg of TFE supplied to thereby obtain 43.2 kg of a dry powder.

Comparative Example 4

Fluorinated pellets were obtained as in Comparative Example 1, except for changing the charge amount of PPVE to 2.11 kg, changing the charge amount of methanol to 2.76 kg, and adding 0.047 kg of PPVE for every 1 kg of TFE supplied to thereby obtain 42.8 kg of a dry powder.

Comparative Example 5

Fluorinated pellets were obtained as in Comparative Example 1, except for changing the charged amount of PPVE to 3.47 kg, changing the charged amount of methanol to 4.30 kg, changing the charged amount of the 50% methanol solution of di-n-propyl peroxydicarbonate to 0.051 kg, and adding 0.071 kg of PPVE for every 1 kg of TFE supplied to thereby obtain 43.8 kg of a dry powder.

Example 1

Fluorinated pellets were obtained as in Comparative Example 1, except for changing the charged amount of PPVE to 2.43 kg, changing the charged amount of methanol to 1.80 kg, adding 0.053 kg of PPVE for every 1 kg of TFE supplied, changing the raised temperature of the vacuum vibration-type reactor to 180°C, and changing the reaction condition to at 180°C and for 10 hours.

Example 2

Fluorinated pellets were obtained as in Comparative Example 1, except for changing the charged amount of methanol to 1.74 kg.

Example 3

Fluorinated pellets were obtained as in Comparative Example 1, except for changing the charge amount of PPVE to 2.69 kg, changing the charge amount of methanol to 1.56 kg, and adding 0.057 kg of PPVE for every 1 kg of TFE supplied to thereby obtain 43.2 kg of a dry powder.
The pellets obtained in the Examples and the Comparative Examples were used to measure various physical properties by the methods described above. The results are shown in Table 3.

[Table 3]

Table 3

|  | PPVE content (% by mass) | MFR (g/10 min) | Number of functional groups (groups/C10$^6$) | Melting point (°C) |
|---|---|---|---|---|
| Comparative Example 1 | 5.2 | 42.0 | <6 | 302 |
| Comparative Example 2 | 5.6 | 30.9 | <6 | 302 |
| Comparative Example 3 | 5.3 | 37.0 | 320 | 302 |
| Comparative Example 4 | 4.5 | 36.0 | <6 | 304 |
| Comparative Example 5 | 6.6 | 40.0 | <6 | 299 |
| Example 1 | 5.0 | 34.0 | 15 | 302 |
| Example 2 | 5.2 | 36.0 | <6 | 302 |
| Example 3 | 5.4 | 38.0 | <6 | 302 |

The description "<6" in Table 3 means that the number of functional groups is less than 6.
Then, by using the obtained pellets, the following properties were evaluated. The results are shown in Table 4.

(Water vapor permeability)

By using the pellets and a heat press molding machine, a sheet-shape test piece of approximately 0.2 mm in thickness was prepared. 18 g of water was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with the water, and held at a temperature of 95°C for 30 days, and thereafter, the test cup was taken out and allowed to stand at room temperature for 2 hours; thereafter, the amount of the mass lost was measured. The water vapor permeability (g·cm/m$^2$) was determined by the following formula.

Water vapor permeability (g·cm/m$^2$) = the amount of the mass lost (g) × the thickness of the sheet-shape test piece (cm) / the permeation area (m$^2$)

(Air permeability coefficient)

By using the pellets and a heat press molding machine, a sheet-shape test piece of approximately 0.1 mm in thickness. By using the obtained test piece, air permeability was measured with a differential pressure type gas permeation meter (L100-5000 gas permeability meter, manufactured by Systech Illinois) according to the method described in JIS K7126-1:2006. The air permeability value at a permeation area of 50.24 cm$^2$ at a test temperature of 70°C at a test humidity of 0% RH was obtained. The obtained air permeability and the test piece thickness were used to calculate the air permeability coefficient from the following equation.

Air permeability coefficient (cm$^3$·mm/ (m$^2$·24 h·atm)) = GTR × d

GTR: air permeability (cm$^3$/ (m$^2$·24 h·atm))
d: test piece thickness (mm)

(Abrasion test)

By using the pellets and a heat press molding machine, a sheet-shape test piece of approximately 0.2 mm in thickness was prepared, and a test piece having 10 cm $\times$ 10 cm was cut out therefrom. The prepared test piece was fixed on a test bench of a Taber abrasion tester (No. 101 Taber type abrasion tester with an option, manufactured by YASUDA SEIKI SEISAKUSHO, LTD.) and the abrasion test was carried out under the conditions of at a load of 500 g, using an abrasion wheel CS-10 (rotationally polished in 20 rotations with an abrasive paper #240) and at a rotation rate of 60 rpm by using the Taber abrasion tester. The weight of the test piece after 1,000 rotations was measured, and the same test piece was further subjected to the test of 10,000 rotations and thereafter, the weight thereof was measured. The abrasion loss was determined by the following formula.

$$\text{Abrasion loss (mg)} = M1 - M2$$

M1: the weight of the test piece after the 1,000 rotations (mg)
M2: the weight of the test piece after the 10,000 rotations (mg)

(Electrolytic solution permeability)

By using the pellets and a heat press molding machine, a sheet-shape test piece of approximately 0.2 mm in thickness was prepared. 10 g of dimethyl carbonate (DMC) was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with the DMC, and held at a temperature of 60°C for 30 days, and thereafter, the test cup was taken out and allowed to stand at room temperature for 1 hour; thereafter, the amount of the mass lost was measured. The DMC permeability (g·cm/m$^2$) was determined by the following formula.

Electrolytic solution permeability (g·cm/m$^2$) = the mount of the mass lost (g) $\times$ the thickness of the sheet-shape test piece (cm) / the permeation area (m$^2$)

(Creep resistance evaluation)

Creep resistance was measured according to the method described in ASTM D395 or JIS K6262:2013. By using the pellets and a heat press molding machine, a formed article of 13 mm in outer diameter and 8 mm in height was prepared. The obtained formed article was cut to prepare a test piece of 13 mm in outer diameter and 6 mm in height. The prepared test piece was compressed to a compression deformation rate of 25% at normal temperature by using a compression device. The compressed test piece being fixed on the compression device was allowed to stand still in an electric furnace at 80°C for 72 hours. The compression device was taken out from the electric furnace, and cooled to room temperature; thereafter, the test piece was dismounted. The collected test piece was allowed to stand at room temperature for 30 min, and the height of the collected test piece was measured and the extent of recovery was determined by the following formula.

$$\text{Extent of recovery (\%)} = (t_2 - t_1)/t_3 \times 100$$

$t_1$: the height of a spacer (mm)
$t_2$: the height of the test piece dismounted from the compression device (mm)
$t_3$: the height after compressive deformation (mm)

In the above test, $t_1$ was 4.5 mm and $t_3$ was 1.5 mm.

(Rate of deflection at 110°C under load)

By using pellets and a heat press molding machine, a sheet-shape test piece of approximately 4.2 mm in thickness was prepared, and a test piece having 80 $\times$ 10 mm was cut out therefrom and heated in an electric furnace at 100°C for 20 hours. Except that the obtained test piece was used, a test was carried out according to the method described in JIS K-K 7191-1 with a heat distortion tester (manufactured by YASUDA SEIKI SEISAKUSHO, LTD.) under the condition of a test temperature of 30 to 150°C, a temperature-increasing rate of 120°C/hour, a bending stress of 1.8 MPa, and a flatwise method. The rate of deflection under load was determined by the following formula. A sheet, the rate of deflection at 110°C under load of which is small, has excellent rigidity at a high temperature of 110°C.

$$\text{Rate of deflection under load (\%) = a2 / a1} \times 100$$

a1: test piece thickness before the test (mm)
a2: amount of deflection at 110°C (mm)

(Chemical solution (electrolytic solution) immersion crack test (heat distortion resistance after immersion in chemical solution))

A sheet of approximately 2 mm in thickness was prepared by using the pellets and a heat press molding machine. The obtained sheet was punched out by using a rectangular dumbbell of 13.5 mm × 38 mm to obtain three test pieces. A notch was formed in the middle of a long side of the each obtained test piece according to ASTM D1693 by a blade of 19 mm × 0.45 mm. Three notched test pieces and 25 g of dimethyl carbonate were put in a 100-mL polypropylene-made bottle, and heated in an electric furnace at 80°C for 720 hours; and thereafter, the notched test pieces were taken out. Then, the three notched test pieces were mounted on a stress crack test jig according to ASTM D1693, and heated in an electric furnace at 120°C for 24 hours; thereafter, the notches and their vicinities were visually observed and the number of cracks was counted. A sheet that does not crack has excellent heat distortion resistance even after immersion in a chemical solution such as an electrolytic solution.

Good: the number of cracks was 0
Poor: the number of cracks was 1 or more

(Evaluation of swelling by electrolytic solution)

By using the pellets and a heat press molding machine, a sheet of approximately 0.2 mm in thickness was prepared. Test pieces of 15-mm square were prepared from the obtained sheet. 10 sheets of the obtained test pieces and 2 g of an electrolytic solution (dimethyl carbonate (DMC)) were put in a 20-mL glass sample bottle, and the cap of the sample bottle was closed. The sample bottle was put in a thermostatic chamber at 80°C, and heated for 144 hours to thereby immerse the test pieces in the electrolytic solution. Thereafter, the sample bottle was taken out from the thermostatic chamber, and cooled to room temperature; then, the test pieces were taken out from the sample bottle, and the weights of the test pieces were measured. The rate of change (% by mass) in the weight of the test piece after immersion relative to the weight of the test piece before immersion was calculated.

(Surface smoothness)

The copolymer was injection molded by using an injection molding machine (SE50EV-A, manufactured by Sumitomo Heavy Industries, Ltd.) set at a cylinder temperature of 390°C, a metal mold temperature of 190°C, and an injection speed of 130 mm/s. The metal mold used was a metal mold (4 cavities of 15 mm × 15 mm × 0.6 mmt) Cr-plated on HPM38. The surface of the obtained injection molded article was visually observed and the surface smoothness was evaluated according to the following criteria.

Excellent: the surface was smooth
Good: roughness was observed only on a surface of the portion positioned in the vicinity of the gate of no more than one formed article per four formed articles
Fair: roughness was observed only on a surface of the portion positioned in the vicinity of the gate of two or more formed articles per four formed articles
Poor: roughness was observed on the most portion of the surface

(Electric wire coating property)

Extrusion coating in the following coating thickness was carried out on a silver-plated conductor composed of 19 twisted wires each having 0.05 mm with pellets by a 30-mmφ electric wire coating forming machine (manufactured by Tanabe Plastics Machinery Co., Ltd.) to thereby obtain a coated electric wire.
The extrusion conditions for the electric wire coating were as follows.

a) Core conductor: conductor diameter: approximately 0.25 mm (19 × 0.05 mm twisted)
b) Coating thickness: 0.20 mm
c) Coated electric wire diameter: 0.65 mm

d) Electric wire take-over speed: 250 m/min
e) Extrusion condition:

· Cylinder screw diameter = 30 mm, a single screw extruder of L/D = 24
·

Die (inner diameter)/tip (outer diameter) = 9.2 mm/4.0 mm

Set temperature of extruder: barrel section C-1 (330°C), barrel section C-2 (360°C), barrel section C-3 (375°C), head section H (390°C), die section D-1 (405°C), die section D-2 (395°C). Set temperature for preheating core wire: 80°C

(2-1) Presence/absence of the coating discontinuity

Electric wire coating forming was continuously carried out; and the case where coating discontinuity occurred one or more times in 1 hour was determined as poor (Poor) in continuous forming, and the case where no coating discontinuity occurred was determined as fair (Good) in continuous forming.

(2-2) Number of sparks

A spark tester (DENSOK HIGH FREQ SPARK TESTER) was installed online on an electric wire coating line, and the presence/absence of defects of the electric wire coating was evaluated at a voltage of 1,500 V. The case where no spark was generated in 1-hour continuous forming was determined as passing (Good), and the case where a spark was detected therein was determined as rejected (Poor).

(2-3) Breadth of variation of outer diameter

The outer diameter was continuously measured for 1 hour using a diameter measuring head (ODAC 18XY manufactured by Zumbach), the detected values were rounded off to the third decimal place, the largest minimum value when being ±0.01 of the target outer diameter 0.65 mm was denoted as ±0.01 mm, ±0.02 when being ±0.02 mm, ±0.03 when being ±0.03 mm, and N/A when coating discontinuity occurred.

(Dielectric loss tangent)

By melt forming the pellets, a cylindrical test piece of 2 mm in diameter was prepared. The prepared test piece was set in a cavity resonator for 6 GHz, manufactured by Kanto Electronic Application and Development Inc., and the dielectric loss tangent was measured by a network analyzer, manufactured by Agilent Technologies Inc. By analyzing the measurement result by analysis software "CPMA", manufactured by Kanto Electronic Application and Development Inc., on PC connected to the network analyzer, the dielectric loss tangent (tanδ) at 20°C at 6 GHz was determined.

[Table 4]

Table 4

| | Water vapor permeability (g·cm/m²) | Abrasion loss (mg) | Air permeability coefficient cm³·mm /(m²·24 h·atm) | Electrolytic solution permeability (g·cm/m²) | Creep resistance evaluation Extent of recovery (%) | Rate of deflection at 110°C under load (%) | Chemical immersion crack test | Swelling resistance (% by mass) | Surface smoothness | Electric wire coating property | | | Dielectric tangent |
|---|---|---|---|---|---|---|---|---|---|---|---|---|---|
| | | | | | | | | | | Coating discontinuity | Spark evaluation | Breadth of variation of outer diameter (mm) | |
| Comparative Example 1 | 9.9 | 27.8 | 362 | 6.1 | 20 | 66% | Poor | 0.3 | Excellent | Good | Good | ±0.01 | 0.00035 |
| Comparative Example 2 | 11.2 | 22.3 | 401 | 6.5 | 18 | 70% | Good | 0.3 | Poor | Poor | Poor | N/A | 0.00038 |
| Comparative Example 3 | 10.2 | 25.6 | 420 | 8.1 | 16 | 67% | Good | 0.5 | Excellent | Good | Poor | ±0.03 | 0.00111 |
| Comparative Example 4 | 8.8 | 28.1 | 338 | 6.0 | 24 | 64% | Poor | 0.3 | Good | Good | Good | ±0.01 | 0.00048 |
| Comparative Example 5 | 12.2 | 21.2 | 428 | 6.5 | 14 | 72% | Good | 0.3 | Excellent | Good | Good | ±0.01 | 0.00038 |
| Example 1 | 10.1 | 25.5 | 365 | 6.2 | 21 | 66% | Good | 0.3 | Fair | Good | Good | ±0.02 | 0.00039 |
| Example 2 | 10.2 | 25.5 | 367 | 6.2 | 20 | 67% | Good | 0.3 | Good | Good | Good | ±0.01 | 0.00036 |
| Example 3 | 10.3 | 25.6 | 369 | 6.2 | 19 | 68% | Good | 0.3 | Excellent | Good | Good | ±0.01 | 0.00036 |

**Claims**

1. A copolymer comprising tetrafluoroethylene (TFE) units and, based on the total of monomer units, 4.8-5.7 mass% of perfluoro(propyl vinyl ether) (PPVE) units, and which has a melt flow rate at 372°C of 33.0-39.0 g/10 min, and has a total number of $-CF=CF_2$, $-CF_2H$, -COF, -COOH, $-COOCH_3$, $CONH_2$, and $-CH_2OH$ groups of $\leq 50$ per $10^6$ main-chain carbon atoms, in which the melt flow rate and the functional group content are determined according to the methods that are described in the description.

2. An injection molded article, comprising the copolymer of claim 1.

3. A coated electric wire, comprising a coating layer comprising the copolymer of claim 1.

4. A formed article, which comprises the copolymer of claim 1 and is a current collector holder, a member to be compressed, a piping member, a joint, or an electric wire coating.


**Patentansprüche**

1. Copolymer, das Tetrafluorethylen- (TFE)-Einheiten umfasst und basierend auf der Gesamtmenge der Monomereinheiten 4,8-5,7 Masse-% an Perfluor(propylvinylether)- (PPVE)-Einheiten, die eine Schmelzefließrate bei 372 °C von 33,0-39,0 g/10 min aufweist, und eine Gesamtzahl von $-CF=CF_2$-, $-CF_2H$-, -COF-, -COOH-, $-COOCH_3$-, $-CONH_2$- und $-CH_2OH$-Gruppen von $\leq 50$ pro $10^6$ Kohlenstoffatomen der Hauptkette aufweist, bei denen die Schmelzefließrate und der Gehalt an funktionellen Gruppen nach den in der Beschreibung beschriebenen Verfahren bestimmt werden.

2. Spritzgussgegenstand, der das Copolymer nach Anspruch 1 umfasst.

3. Beschichteter elektrischer Draht, der eine Beschichtungsschicht umfasst, die das Copolymer nach Anspruch 1 umfasst.

4. Formgegenstand, der das Copolymer nach Anspruch 1 umfasst und ein Stromableiterhalter, ein zu komprimierendes Element, ein Rohrleitungselement, ein Rohrverbindungsstück oder eine Beschichtung eines elektrischen Drahtes ist.


**Revendications**

1. Copolymère comprenant des unités de tétrafluoroéthylène (TFE) et, sur la base du total d'unités monomères, 4,8 à 5,7 % en masse d'unités de perfluoro(propyl viny léther) (PPVE), et qui présente un débit de fusion à 372 °C de 33,0 à 39,0 g/10 min et présente un nombre total de groupes parmi $-CF=CF_2$, $-CF_2H$, -COF, -COOH, $-COOCH_3$, $-CONH_2$ et $-CH_2OH$ de $\leq 50$ pour $10^6$ atomes de carbone de chaîne principale, dans lequel le débit de fusion et la teneur en groupes fonctionnels sont déterminés selon les méthodes qui sont décrites dans la description.

2. Article moulé par injection, comprenant le copolymère selon la revendication 1.

3. Fil électrique revêtu, comprenant une couche de revêtement comprenant le copolymère selon la revendication 1.

4. Article formé, qui comprend le copolymère selon la revendication 1 et qui est un support de collecteur de courant, un élément à comprimer, un élément de tuyauterie, un raccord ou un revêtement de fil électrique.

**EP 4 299 612 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019210420 A
- JP 2008066254 A
- US 2021024769 A1